# EUROPEAN PATENT SPECIFICATION

(11) **EP 3 885 750 B1**
(45) Date of publication and mention of the grant of the patent: **19.03.2025**
(21) Application number: 19886784.8
(22) Date of filing: 21.11.2019
(51) Int. Cl.: G01N 23/20025, G01N 23/205, G01N 23/207, G01N 1/28

(54) **SAMPLE HOLDER UNIT FOR SINGLE-CRYSTAL X-RAY STRUCTURE ANALYSIS APPARATUS**
PROBENHALTEREINHEIT FÜR EINKRISTALLINE RÖNTGENSTRUKTURANALYSEVORRICHTUNGEN
UNITÉ PORTE-ÉCHANTILLON POUR DISPOSITIFS D'ANALYSE STRUCTURELLE AUX RAYONS X SUR MONOCRISTAL

(30) Priority: 22.11.2018 JP 2018219781
(43) Date of publication of application: 29.09.2021
(73) Proprietor: Rigaku Corporation, Akishima-shi Tokyo 196-8666 (JP)
(72) Inventor: SATO, Takashi, Tokyo 196-8666 (JP)
(74) Representative: Lambacher, Michael
(86) International application number: PCT/JP2019/045701
(87) International publication number: WO 2020/105727

(56) References cited:
- EP-A1- 3 287 775
- EP-A2- 1 479 794
- WO-A1-2009/001602
- WO-A1-2014/038220
- WO-A2-03/050598
- JP-A- 2013 156 218
- JP-A- 2017 138 302
- US-A1- 2003 152 194

## Description

### TECHNICAL FIELD

The present invention relates to a next-generation single-crystal X-ray structure analysis apparatus capable of analyzing a structure of a material by an aggregative microstructure such as its atomic or molecular arrangement; and relates specifically to a sample holder unit for a single-crystal X-ray structure analysis apparatus as a tool for performing processing including preparation of a single-crystal sample that becomes an analysis object.

### BACKGROUND ART

In research and development for new devices and materials, the materials are ordinarily synthesized and evaluated to determine the next research policy based on the foregoing. In a structure analysis of a material using X-ray diffraction for performing material development in a short period of time, a search method of a material structure centering on the material structure analysis capable of efficiently performing the structure analysis, and an X-ray structure analysis used therein are indispensable for efficiently searching the material structure that realizes the function/physical property of an object material.

However, it has been difficult for those other than X-ray specialists to perform the structure analysis based on the results obtained by the foregoing method. Therefore, here has been a demand for an X-ray structure analysis system with which the structure analysis can be performed by anyone who is not even a specialist of X-rays has been demanded. In this regard, as is known from the following Patent Document 1, the single-crystal X-ray structure analysis has gained attention as a method capable of catching a precise and highly accurate three-dimensional structure of molecules.

On the other hand, in this single-crystal X-ray structure analysis, there has been such a large constraint that a single-crystal needs to be prepared by crystallizing a sample. However, as is known from not only the following Non-Patent Documents 1 and 2 but also Patent Document 2, the single-crystal X-ray structure analysis becomes widely applicable for those including a liquid compound that cannot be crystallized, a sample incapable of acquiring a sufficient amount for crystallization, and so forth via development of a material called "crystalline sponge" (for example, a porous complex crystal in which countless pores each having a diameter of 0.5 to 1 nm are formed).

Patent Document 3 describes an integrated crystal mounting and alignment system for high-throughput biological crystallography. For this purpose a sample assembly is taught which comprises a sample captured in a sample loop which, in turn, is attached to a sample tube. The sample tube is attached to a sample base having. A sample cassette and a cassette cover are further provided to receive and keep a plurality of sample assemblies immersed in liquid nitrogen.

From Patent Document 4 a sample holder with an extension element is known. The sample holder comprises a tube for holding a sample and a base element that holds the tube. The extension element can be connected to the back side of the base element so that the height of the sample holder can be adjusted depending on whether the sample holder is received by a high-pressure freezing unit or attached to a goniometer.

Patent Document 5 describes an apparatus for growing crystal by vaporizing biological macromolecular solution into an oversaturated state. The apparatus comprises a sealed room that receives a crystallizing agent solution, and a communicating tube that communicates with the sealed room and has a small sectional area for suppressing convection of air. A plurality of droplets of solution dissolving a biological macromolecule and a crystallizing agent therein are held in the communicating tube with the plurality of droplets being separated from each other.

### PRIOR ART DOCUMENT

### PATENT DOCUMENT

Patent Document 1: Japanese Unexamined Patent Application Publication No. 2007-3394
Patent Document 2: Re-publication of PCT International Publication WO2016/017770
Patent Document 3: WO 03/050598 A2
Patent Document 4: EP 3 287 775 A1
Patent Document 5: EP 1 479 794 A2

### NON-PATENT DOCUMENT

Non-Patent Document 1: Makoto Fujita; X-ray analysis on the nanogram to microgram scale using porous complexes; Nature 495, 461-466; 28 March 2013

Non-Patent Document 2: Hoshino et al. (2016), The updated crystalline sponge method IUCrJ, 3, 139-151

### SUMMARY OF THE INVENTION

### PROBLEMS TO BE SOLVED BY THE INVENTION

However, in the single-crystal X-ray structure analysis as becoming a conventional technique in which the above-described crystalline sponge is used, it is necessary to quickly and accurately perform a step of soaking a sample of a very small amount of approximately several ng to several µg separated by every kind of devices in a framework of a very small and fragile crystalline sponge having a size of approximately 100 µm, and further a step of accompanying fine and precise operations in which the very small crystalline sponge in which the sample is soaked is taken out; is attached to a tool; and is installed at the X-ray irradiation position inside a single-crystal X-ray structure analysis apparatus. In addition, these fine and precise operations carried out in a short period of time largely affect the measurement result of the sample after being soaked in the crystalline sponge, thereby being very important operations.

Accordingly, the present invention has been achieved in view of problems in the above-described conventional technique, and the objective is, specifically, to provide a sample holder unit capable of quickly, surely and easily performing single-crystal X-ray structure analysis with a crystalline sponge without conventionally fine and precise operations for which rapidness is required being accompanied, the operations including a removal operation of a sample soaked in a very small and fragile crystalline sponge and an attachment operation to an apparatus, even if not having specialized knowledge of X-ray structure analysis, in other words, to provide the sample holder unit used in a single-crystal X-ray structure analysis in order to realize a high-yield, efficient, very versatile and user-friendly single-crystal X-ray structure analysis apparatus.

### MEANS TO SOLVE THE PROBLEMS

(1) In order to achieve the above-described object, it is a feature that the sample holder unit according to the present invention is a sample holder unit for single-crystal X-ray structure analysis using a porous complex crystal, the sample holder unit comprising a sample holder used in a single-crystal X-ray structure analysis apparatus, and an applicator in which the sample holder can be stored, wherein the sample holder comprises a base part attachable to a goniometer in the single-crystal X-ray structure analysis apparatus, the base part formed to have a sample introduction structure into which a sample to be soaked in a porous complex crystal is introduced; and a holding part that can hold the porous complex crystal capable of soaking the sample in a plurality of fine pores formed therein, the holding part formed to the base part, and the applicator comprises an opening and a storing space in which the sample holder that holds the porous complex crystal can be stored; a seal part provided on a contact surface with the sample holder stored in the storing space; and a pull-out prevention part that can prevent the sample holder from being pulled out from the opening, the pull-out prevention part engaged with the sample holder stored in the storing space.
(2) Further, it is a feature that in the sample holder unit according to the present invention, the sample introduction structure comprises a sample introduction pipe passing through the base part from an outside of the unit to an inside thereof, and the pull-out prevention part has a shape not obstructing the sample introduction pipe of the sample holder at an engagement position thereof.
(3) Further, it is a feature that in the sample holder unit according to the present invention, the pull-out prevention part comprises a rotary lever that protrudes toward the opening of the applicator and prevents the sample holder from being pulled out therefrom.
(4) Further, it is a feature that in the sample holder unit according to the present invention, the pull-out prevention part that slides so as to protrude toward the opening of the applicator has a shape that prevents the sample holder from being pulled out therefrom.
(5) Further, it is a feature that in the sample holder unit according to the present invention, the pull-out prevention part has an inclined surface at an end of a sliding surface of the pull-out prevention part, the sliding surface engaged with the sample holder.
(6) Further, it is a feature that in the sample holder unit according to the present invention, the applicator has a pair of parallel guide rails provided at both side portions of the applicator, and the pull-out prevention part slides to be engaged with the pair of parallel guide rails.
(7) Further, it is a feature that in the sample holder unit according to the present invention, the applicator has a pair of parallel guide rails provided at both side portions of the applicator; the pull-out prevention part comprises engagement parts that slide to be engaged with the pair of parallel guide rails; and the pair of parallel guide rails and the engagement parts each whose cross-section is U-shaped are formed.

### EFFECT OF THE INVENTION

According to a sample holder unit for a single-crystal X-ray structure analysis apparatus of the present invention as described above, an operation of soaking a sample in a fragile crystalline sponge in the single-crystal X-ray structure analysis apparatus, followed by an operation of attaching it to a goniometer tip can be quickly, precisely and easily carried out without accompanying conventionally precise and fine operations, and thus single-crystal X-ray structure analysis with a crystalline sponge can be quickly, precisely and easily carried out. Thus, it becomes possible to make the single-crystal X-ray structure analysis with the crystalline sponge be easily usable, and to widely spread it.

### BRIEF DESCRIPTION OF THE DRAWINGS

FIG. 1 is a diagram showing a whole configuration of a single-crystal X-ray structure analysis apparatus provided with a single-crystal X-ray diffractometer according to one embodiment of the present invention.
FIG. 2 is a diagram showing a configuration of the above-described single-crystal X-ray diffractometer.
FIG. 3 is a block diagram showing an electrical configuration inside the above-described single-crystal X-ray structure analysis apparatus.
FIG. 4 is a diagram including a photograph showing an XRDS pattern or an image obtained by the above-described single-crystal X-ray structure analysis apparatus.
FIG. 5 is a diagram including a photograph showing one example of a screen obtained by executing X-ray diffraction data measurement/processing software on the above-described single-crystal X-ray structure analysis apparatus.
FIG. 6 is a diagram including a screen showing a molecular model prepared using a structure analysis program of the above-described single-crystal X-ray structure analysis apparatus.
FIG. 7 is a diagram including a photograph showing one example of a structure centering on a goniometer of the above-described single-crystal X-ray diffractometer.
FIG. 8 is a sectional view showing one example of a sample holder to be attached to the above-described goniometer of Example 1 according to the present invention.
FIG. 9 is a perspective view of an applicator for storing the above-described sample holder therein.
FIG. 10 is an explanatory diagram showing a sample holder unit in a state where the above-described sample holder is stored in the above-described applicator.
FIG. 11 is an explanatory diagram showing a sample holder unit in the state where the above-described sample holder is stored in the above-described applicator.
FIG. 12 is an explanatory diagram showing a process of inserting sample introduction pipes in the above-described sample holder.
FIG. 13 is an explanatory diagram showing a step of soaking a sample introduced from a sample introduction pipe, in a crystalline sponge according to the same.
FIG. 14 is a diagram showing one example of a pretreatment apparatus used in single-crystal X-ray structure analysis.
FIG. 15 is a perspective view of an applicator of Example 2 according to the present invention.
FIG. 16 is a sectional view of a sample holder unit of Example 2 according to the same.
FIG. 17 is a perspective view of a sample holder unit partially showing a cross-section, of Example 3 according to the present invention.

### DETAILED DESCRIPTION OF EMBODIMENTS

Next, the sample holder unit used in the single-crystal X-ray structure analysis apparatus in which a crystalline sponge is utilized, according to one embodiment of the present invention, are described in detail referring to the attached drawings. In addition, the expression of "A or B" in the present application means "at least one of A and B", and includes "A and B" unless there are exceptional circumstances where there exists no possibility of A and B.

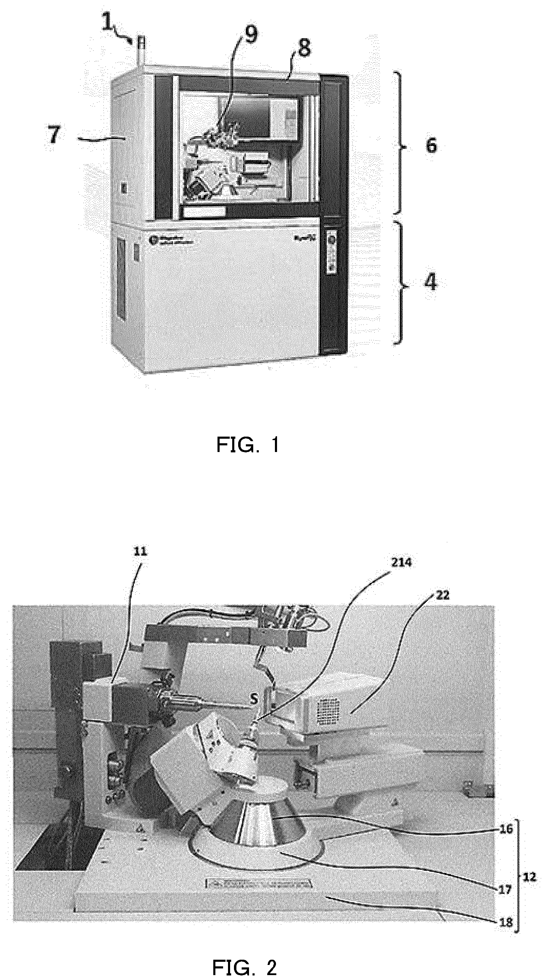

The attached FIG. 1 shows the entire appearance configuration of a single-crystal X-ray structure analysis apparatus provided with a single-crystal X-ray diffractometer according to one embodiment of the present invention, and as is clear from the figure, the single-crystal X-ray structure analysis apparatus 1 comprises a base stand 4 in which a cooling device and an X-ray generation power supply unit are stored, and an X-ray protection cover 6 placed on the base stand 4.

The X-ray protection cover 6 is provided with a casing 7 for surrounding the single-crystal X-ray diffractometer 9, a door 8 provided in front of the casing 7, and so forth. The door 8 provided in front of the casing 7 is openable, and in this open state, various operations can be performed for the internal single-crystal X-ray diffractometer 9. In addition, the present embodiment as shown in the figure is directed to the single-crystal X-ray structure analysis apparatus 1 provided with the single-crystal X-ray diffractometer 9 for performing a structure analysis of a material using the crystalline sponge mentioned below.

The single-crystal X-ray diffractometer 9 comprises an X-ray tube 11 and a goniometer 12, as shown in FIG. 2 as well. The X-ray tube 11 comprises a filament, a target (referred to also as "anticathode") arranged so as to be opposed to the filament, and a casing for airtightly storing them, though not shown in the figure herein. This filament subjected to current applied by the X-ray generation power supply unit stored in the base stand 4 of FIG. 1 generates heat to emit thermal electrons. Further, a high voltage is applied between the filament and the target by the X-ray generation power supply unit, and the thermal electrons emitted from the filament are accelerated by the high voltage, and collide with the target. This collision area forms an X-ray focus, and X-rays are generated from the X-ray focus, and are spread out. In more detail, though not shown in the figure herein, the X-ray tube 11 comprising a microfocus tube and an optical element such as a multilayer focusing mirror or the like enables irradiation with higher brightness beam, and can also be selected from a radiation source such as Cu, Mo, Ag or the like. As exemplified above, the filament, the target arranged so as to be opposed to the filament, and the casing for airtightly storing them serve as an X-ray source, and a configuration for X-ray irradiation comprising the microfocus tube and the optical element such as the multilayer focusing mirror or the like serves as an X-ray irradiation section.

Further, the goniometer 12 supporting a sample S to be analyzed comprises a θ rotation table 16 that is rotatable with a sample axis line ω passing through an X-ray incident point of the sample S as a center, and a 2θ rotation table 17 that is arranged around the θ rotation table 16 and is rotatable with the sample axis line ω as a center. In addition, according to the present embodiment, the sample S is soaked inside a crystalline sponge previously attached to a part of the sample holder 214 mentioned below. Drive devices (not shown in the figure) for driving the above-described θ rotation table 16 and 2θ rotation table 17 are stored inside a base 18 of the goniometer 12, and the θ rotation table 16 is driven by these drive devices to be intermittently or continuously rotated at a predetermined angular speed so as to make a so-called θ rotation. Further, the 2θ rotation table 17 is driven by these drive devices to be intermittently or continuously rotated so as to make a so-called 2θ rotation. The above-described drive devices can be constituted from any structure, and for example, can be constituted from a power transmission structure comprising a worm and a worm wheel.

An X-ray detector 22 is placed on a part of the outer periphery of the goniometer 12, and the X-ray detector 22 is constituted from for example, CCD type and CMOS type two-dimensional pixel detectors, a hybrid type pixel detector, or the like. In addition, an X-ray detection measurement section means a configuration in which X-rays diffracted or scattered by the sample are detected and measured, and comprises the X-ray detector 22 and a control section that controls the same.

The single-crystal X-ray diffractometer 9 is constituted as described above, and thus the sample S is θ-rotated with the sample axis line ω as a center by the θ rotation of the θ rotation table 16 in the goniometer 12. During the θ rotation of this sample S, X-rays generated from the X-ray focus inside the X-ray tube 11, that is directed to the sample S enter the sample S at a predetermined angle, and are diffracted/scattered. That is, the incident angle of X-rays entering the sample S changes depending on the θ rotation of the sample S.

When the Bragg diffraction condition between an incident angle of X-rays entering the sample S and a crystal lattice plane is satisfied, diffraction X-rays are generated from the sample S. The diffraction X-rays are received by the X-ray detector 22 to measure an X-ray intensity thereof. From those described above, an angle of the X-ray detector 22 with respect to the incident X-rays, that is, an intensity of the diffraction X-rays corresponding to a diffraction angle is measured, and a crystal structure concerning the sample S and so forth are analyzed from this measurement result.

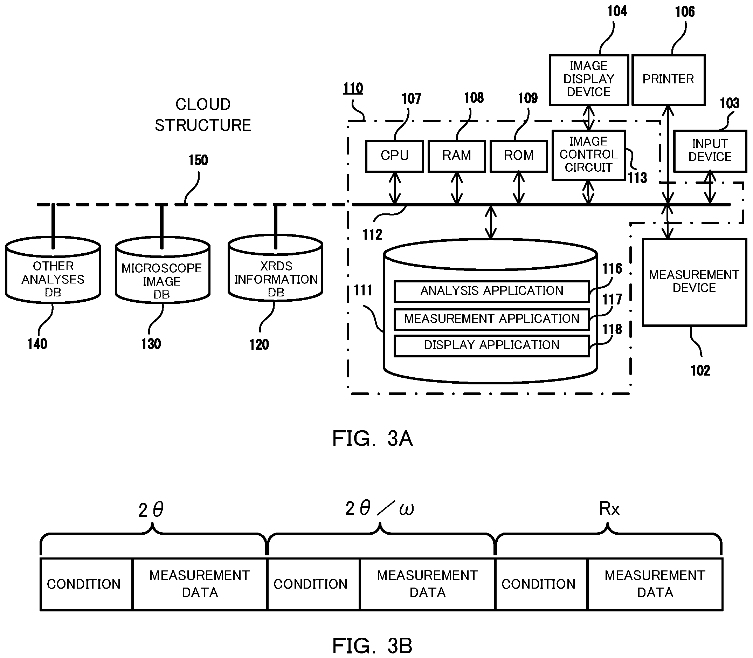

Then, FIG. 3A shows one example of the detail of an electrical internal configuration constituting a control section 110 in the above-described single-crystal X-ray structure analysis apparatus. In addition, as a matter of course, the present invention is not limited to the following embodiments according to the present invention.

This single-crystal X-ray structure analysis apparatus 1 includes the above-described internal configuration and further comprises a measurement device 102 for measuring a suitable material used as a sample; an input device 103 constituted from a keyboard, a mouse and so forth; an image display device 104 as display means; a printer 106 as means for printing and outputting the analysis result; CPU (Central Processing Unit) 107; RAM (Random Access Memory) 108; ROM Read Only Memory) 109; a hard disk 111 as an external storage medium, and so forth. These elements are electrically connected mutually by a bus 112.

The image display device 104 constituted from an image display unit such as a CRT display, a liquid-crystal display or the like displays an image on a screen in accordance with an image signal generated by an image control circuit 113. The image control circuit 113 generates the image signal based on image data input therein. The image data input in the image control circuit 113 is generated by an operation of every kind of calculation means, achieved by a computer comprising CPU 107, RAM 108, ROM 109, and the hard disk 111. An inkjet plotter, a dot printer, an inkjet printer, an electrostatic transfer printer, or any other printing unit having arbitrary structure is usable for the printer 106. In addition, the hard disk 111 can also be constituted from a magneto-optical disk, a semiconductor memory, or any other storage medium having arbitrary structure.

Analysis application software 116 for managing the overall operation of the single-crystal X-ray structure analysis apparatus 1, measurement application software 117 for managing the operation of the measurement processing using the measurement device 102, and display application software 118 for managing the operation of the display processing using the image display device 104 are stored inside the hard disk 111. A predetermined function is achieved after reading these pieces of application software from the hard disk 111, as needed, to transfer them to RAM 108.

This single-crystal X-ray structure analysis apparatus 1 further comprises for example, a database placed in a cloud area, the database for storing every kind of measurement results including measurement data obtained by the above-described measurement device 102. Referring to an example of the figure, as is explained below, shown are an XRDS information database 120 that stores XRDS image data obtained by the above-described measurement device 102, and a microscope image database 130 that stores actually observed images obtained by the microscope, and further shown are for example, measurement results obtained via analysis performed with XRF, not X-rays but Raman ray or the like, and the other analysis database 140 that stores physical property information. In addition, these databases are not necessarily stored inside the single-crystal X-ray structure analysis apparatus 1, and for example, they may be provided outside and be communicably connected mutually via a network 150 or the like.

A method of storing individual measurement data inside an individual file is also taken into account as a file management method for storing a plurality of pieces of measurement data inside a data file, but according to the present embodiment, as shown in FIG. 3B, the plurality of pieces of measurement data are set to be continuously stored inside one data file. In addition, referring to FIG. 3B, storage areas each in which "condition" is written are an area for storing every kind of information including device information and measurement conditions when obtaining the measurement data.

As such measurement conditions, (1) name of measurement object material, (2) type of measurement device, (3) measurement temperature range, (4) measurement start time, (5) measurement end time, (6) measurement angle range, (7) moving speed in scanning movement system, (8) scanning condition, (9) type of X-rays incident on sample, (10) whether or not to use attachments such as a sample high-temperature device, and so forth, are conceivable and every kind of other conditions is also conceivable.

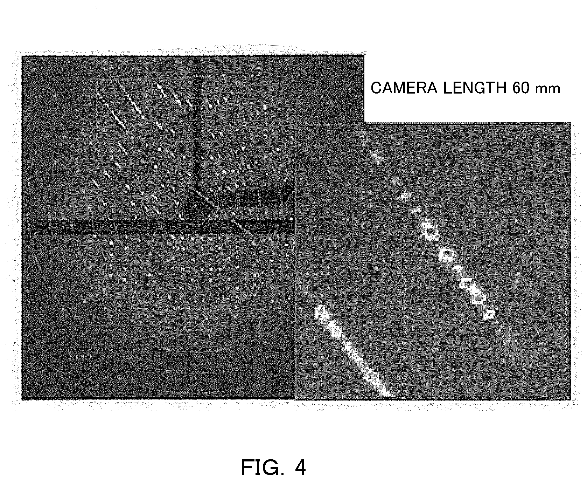

An XRDS (X-ray Diffraction and Scattering) pattern or an image (Refer to FIG. 4) is obtained by receiving/accumulating X-rays received on a flat plane that is a two-dimensional space of the X-ray detector 22 constituting the above-described measurement device 102 for each pixel arranged in planar array, that constitutes the detector, and by measuring an intensity thereof. For example, a pattern or an image on a two-dimensional space of r and θ can be obtained by detecting the intensity of X-rays received via an integral, for each pixel of the X-ray detector 22.

### <Measurement application software>

The XRDS pattern or the image on an observation space, that is obtained by diffraction and scattering of X-rays caused by an object material for irradiation of the X-rays reflects information of an electron density distribution in an actual space of the object material. However, the XRDS pattern being on the two-dimensional space of r and θ does not directly represents symmetry in the actual space of the object material as a three-dimensional space. Accordingly, it is generally difficult to specify the(spatial) arrangement of atoms and molecules that constitute the material with only the existing XRDS image, and thus a specialized knowledge of X-ray structure analysis is required. Therefore, according to the present Example, automatization is achieved by adopting the above-described measurement application software.

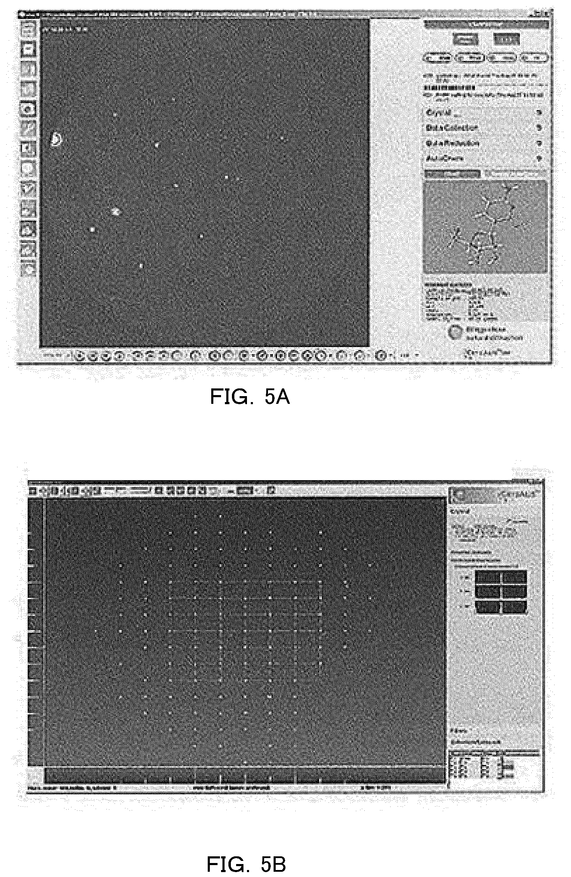

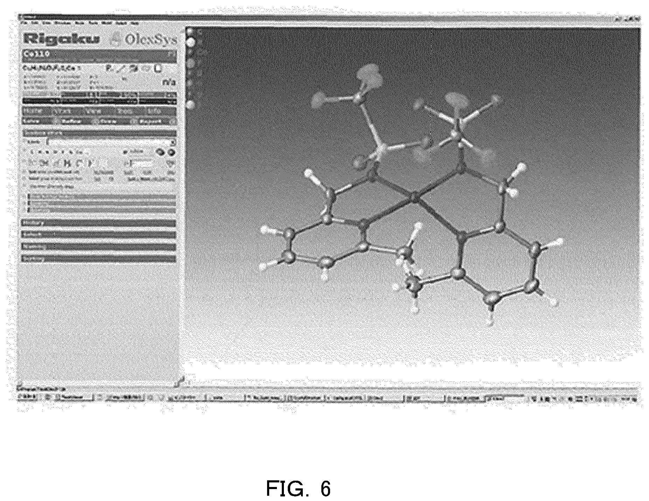

For one example, as shown in the execution screens of FIGS. 5A and 5B, X-ray diffraction data measurement/processing software called "CrysAlis^{Pro}" that is a platform for single-crystal structure analysis is installed to execute preliminary measurement, setting of measurement conditions, main measurement, data processing and so forth. Further, structure analysis and structure refinement are executed in parallel with X-ray diffraction data collection by installing an automatic structure analysis plug-in called "AutoChem". Then, from space group determination to phase determination, construction and correction of molecular modelling, structure refinement, final reporting, and preparation of a CIF file are executed by a structure analysis program called "Olex²" as also shown in FIG. 6.

The whole structure of the single-crystal X-ray structure analysis apparatus 1, and its function have been described as above, and a crystalline sponge according to the present invention, and devices and tools related thereto are specifically described below in detail, referring to the attached drawings.

### <Crystalline sponge>

As described above, the single-crystal X-ray structure analysis has become widely applicable for those including a liquid compound that cannot be crystallized, a very small amount of a sample with several ng to several µg that is incapable of acquiring a sufficient amount to perform crystallization, or the like via development of a material called "crystalline sponge" as a very small and fragile porous complex crystal having an approximate size of several 10 µm to several 100 µm, in whose inside countless pores each having a diameter of 0.5 to 1 nm are formed.

However, in the current situation, in order to perform soaking (post-crystallization) as crystallization of a sample into a framework of the above-described crystalline sponge, as previously described, required is a step of soaking a very small amount of a sample, approximately several ng to several µg, separated by every kind of pretreatment (separation) devices in a framework of a very small and fragile crystalline sponge having an outer diameter of approximately 100 µm provided via immersion in a preserving solvent (carrier) such as cyclohexane or the like, inside a container. Examples of the preserving solvent (carrier) include liquid, a gaseous body (gas), and a supercritical fluid in the middle of them. Subsequently, further required is a step of taking out, from a container, a very small, fragile and difficultly handleable crystalline sponge in a quick manner (in a short period of time in such an extent that the crystalline sponge is not broken due to drying), and accurately attaching it to an X-ray irradiation position inside a single-crystal X-ray diffractometer, more specifically, to a tip of a sample axis of the goniometer 12 (so-called goniometer head pin) while performing centering. These steps are not only fine operations for which high preciseness is required but also those for which rapidness is required for the operator, regardless of presence/absence of a specialized knowledge of X-ray structure analysis, thereby resulting in having a large influence on the measurement result of a sample after being soaked in the crystalline sponge. That is, these operations make single-crystal X-ray structure analysis using a very small crystalline sponge result in low yield, and thus this becomes one of the causes of suppressing the single-crystal X-ray structure analysis using the crystalline sponge from being widely used.

### <Sample holder and sample holder unit>

The present invention that has been accomplished based on the above-described inventor's knowledge enables quickly, surely and easily performing a single-crystal X-ray structure analysis with a very small and fragile crystalline sponge by using a sample holder unit comprising a sample holder for the crystalline sponge (also referred to simply as a sample holder), the sample holder supporting the crystalline sponge as described below, in other words, achieves a high-yield, efficient, very versatile and user-friendly single-crystal X-ray structure analysis apparatus. That is, as to the next-generation single-crystal X-ray structure analysis apparatus according to the present invention, there is a large constraint that the very small and fragile crystalline sponge in which a very small amount of a sample S is soaked is prepared, and further the sample S (crystalline sponge) needs to be taken up from a soaking container and precisely and quickly attached to a predetermined position at the tip of the goniometer 12 in a short and quick period of time in such an extent that the crystalline sponge is not broken due to drying, but specifically in order to achieve the very versatile and user-friendly apparatus, such operations need to be made quickly and easily executable without requiring highly specialized knowledge as well as operation preciseness.

The present invention described below in detail resolves such a problem, that is, provides a sample holder unit for a single-crystal X-ray structure analysis apparatus as a tool for enabling performing an operation of soaking a sample in the crystalline sponge, followed by an operation including attaching it to an apparatus in a high-yield efficient, very versatile and user-friendly manner, by anyone while also using a very small, fragile and difficultly handleable crystalline sponge, and for making it possible to realize the single-crystal X-ray structure analysis apparatus.

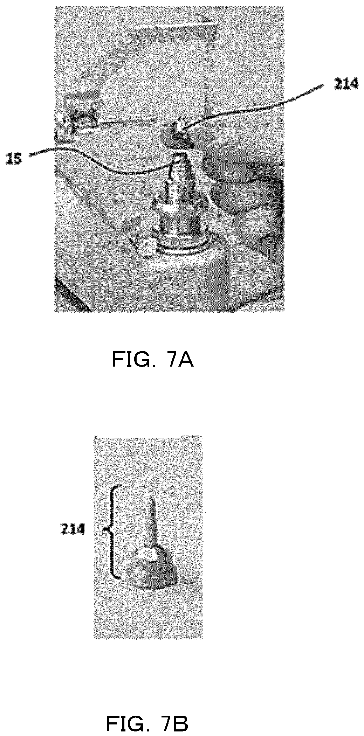

FIG. 7A shows a tip of the goniometer 12 in an enlarged view, and this figure shows a state that, the sample holder 214, being in an enlarged view as FIG. 7B, as a tool where the crystalline sponge 200 soaking a sample to be analyzed that is proposed according to the present invention is attached (mounted) to the goniometer head 15 as a tip of the goniometer 12 in advance. In addition, the sample holder 214, for example, can be attached/detached to/from the goniometer head 15 at the tip of the goniometer 12 by an attaching/positioning mechanism for which magnetic force or the like is used, and can be attached easily and accurately at an exact position by anyone.

### Example 1

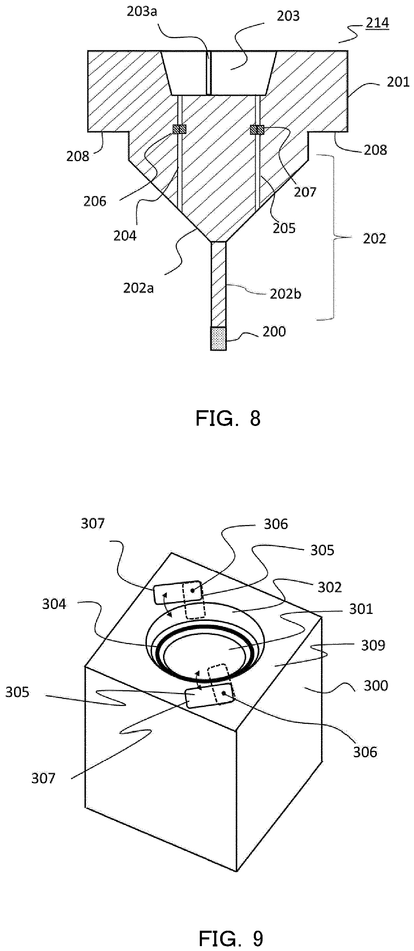

FIG. 8 shows a sectional view of the sample holder 214 according to Example 1. The sample holder 214 comprises a disk-shaped base part 201 made of metal or the like, attached to the goniometer head 15 (Refer to FIG. 7A) at the tip of the goniometer 12, and a protrusion part 202 formed in a protrusion shape extending downward from one surface thereof (the lower surface in the figure). The protrusion part 202 comprises s conical part 202a, and a sample holding part (corresponding to the so-called goniometer head pin) 202b formed in a protrusion shape. The crystalline sponge 200 in which the above-described sample to be analyzed is soaked is combinedly attached to the sample holder 214 beforehand at a predetermined position of the tip of the sample holding part 202b.

Further, an attachment part 203 in a recessed truncated cone shape is formed on the other surface (upper surface in the figure) of the base part 201, and a magnet that is not shown in the figure or a projected engagement part (or recessed part) 203a is provided on a contact surface with the goniometer head 15 at the tip of the foregoing goniometer 12 in this attachment part 203. By having this mechanism, the sample holder 214 can be attached/detached to/from the goniometer head 15 at the tip of the goniometer 12, and can be easily and accurately attached thereto by anyone.

The outer diameter on the base part side of the conical part 202a of the sample holder 214 is set to be smaller than the outer diameter of the base part 201, and an annular-shaped step part 208 is formed. Further, through-holes 204 and 205 passing from the base part 201 to the protrusion part 202 are formed as a sample introduction structure, and seal parts 206 and 207 each for airtightly sealing a hole interior are provided in respective through-holes 204 and 205.

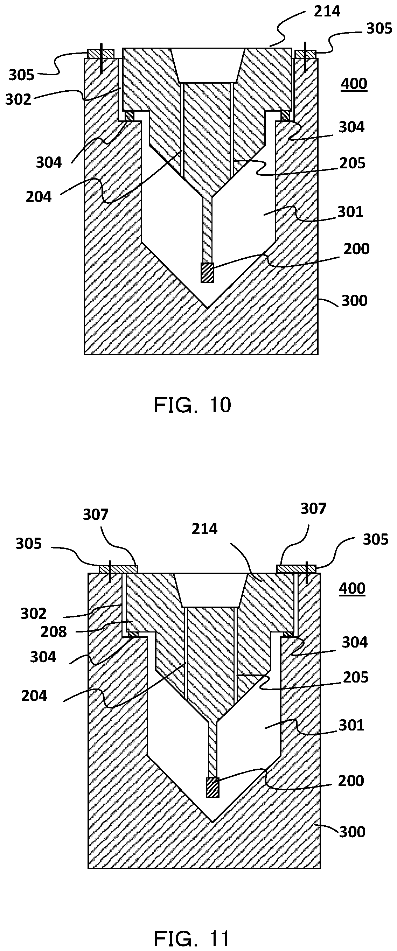

FIG. 9 shows a perspective view of an applicator 300 as a tool for storing the sample holder 214, and soaking a sample in a crystalline sponge 200, that is attached beforehand to the sample holder 214. FIG. 10 is a sectional diagram of a sample holder unit 400 comprising an applicator 300, and a sample holder 214 stored inside it.

The applicator 300, in whose inside a storing space 301 for storing the sample holder 214 is formed, and further at whose upper portion the sample holder 214 is fitted in and an opening 302 for taking it out is formed, is formed of a transparent or opaque member such as for example, glass, a resin, metal or the like. On an annular bottom surface of the opening 302, provided is, for example, an annular seal part (O-ring) 304, and during storing of the sample holder 214, the step part 208 of the sample holder 214 is airtightly maintained between the sample holder 214 and the applicator 300 by coming into contact with the seal part 304.

The inner diameter of the opening 302 of the applicator 300 is set to be slightly larger than the outer diameter of the base part 201 of the sample holder 214, and thus the inner wall of the opening 302 can be made to be a guide surface when inserting/ejecting the sample holder 214 thereinto/therefrom. Thus, preparation can be easily made without giving any damage to the sample S when removing the sample holder 214 comprising the crystalline sponge 200 in which a very small amount of a sample is soaked, from the applicator 300.

Symbols 305 are a pair of pull-out prevention parts (rotary levers) provided onto an opening surface 309 of the applicator 300 comprising the opening 302, and their ends 307 each are rotatably supported by a support point 306, between a retracted position shown by a solid line and a position shown by a dashed line protruding to an inside of the opening 302 from the side.

As shown in FIG. 10, when the sample holder 214 is inserted from the opening 302 of the applicator 300, the step part 208 of the sample holder 214 comes into contact with the seal part 304 in the storing space 301, and the upper end of the sample holder 214 protrudes from the opening surface 309 of the applicator 300. Next, the ends 307 of the pull-out prevention parts 305 each are rotated in a direction of protruding toward the inside of the opening 302 while pushing the upper end of the sample holder 214 in an arrow direction by hand fingers or the like. As shown in FIG. 11, the ends 307 of the pull-out prevention parts 305 each are engaged with the upper end of the sample holder 214 to suppress floating-up, and the step part 208 of the sample holder 214 is simultaneously brought into pressure contact with the seal part 304 by this rotation operation to maintain airtightness between the sample holder 214 and the applicator 300.

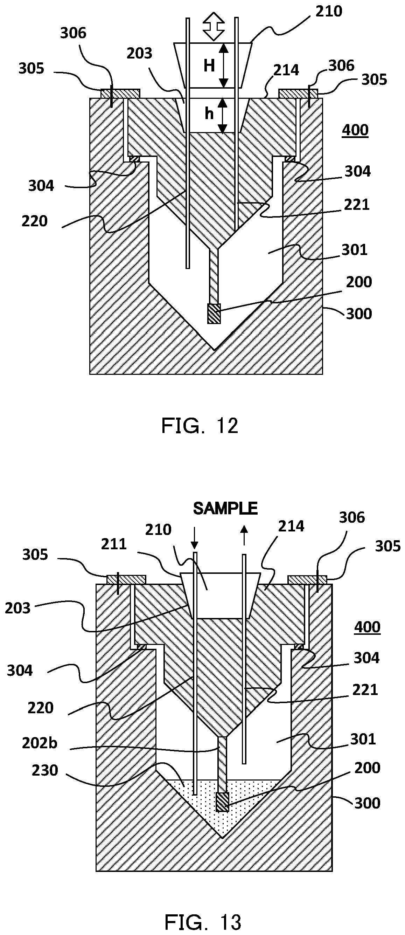

FIG. 12 is an explanatory diagram showing a process of inserting sample introduction pipes (hereinafter, referred to simply as pipes) 220 and 221 as a sample introduction structure in through-holes 204 and 205 (Refer to FIG. 8) of the sample holder, and FIG. 13 is an explanatory diagram in a state where the above-described pipes have been inserted therein. The pipes 220 and 221 each are airtightly maintained between the through-holes 204 and 205 by the seal parts 206 and 207 (Refer to FIG. 8). Symbol 210 representing a support part for supporting the sample introduction pipes 220 and 221 supports both pipes in a state of being approximately parallel to each other at an interval equal to the interval between the through-holes 204 and 205. A support part 210 whose height H is set to be higher than height h of the attachment part 203 in the sample holder 214 has approximately the same shape as that of the attachment part 203 formed into a recessed shape, as being truncated cone-shaped.

The sample introduction pipes 220 and 221 are simultaneously inserted in the through-holes 204 and 205 by pushing down the support part 210 with hand fingers, a manipulator or the like. The support part 210 whose lower end enters into a recessed part of the attachment part 203, and comes into contact with the bottom surface of the recessed part, followed by stopping after lowering to stably support the pipes 220 and 221.

As shown in FIG. 13, the support part 210 protrudes upward (Refer to symbol 211) by a difference of height H and height h from the attachment part 203 in a stopping state. This projected portion 211 is useful as a tool when pulling out the pipes 220 and 221, after soaking a sample in the crystalline sponge 200. That is, the pipes 220 and 221 can be efficiently pulled out at the same time by holding the projected portion 211 of the support portion 210 therebetween with hand fingers, a manipulator or the like to pull it up.

In FIG. 13, symbol 230 represents a hydrophobic solvent (for example cyclohexane) injected at the bottom part of the storing space 301 in the applicator 300, and setting is made to a level at which the crystalline sponge 200 at the tip part of the sample holding part 202b is immersed to fill it therewith. The pipe 220 is a sample injection pipe, and the pipe 221 is a discharge pipe. The tip of the pipe 220 extending to the vicinity of the crystalline sponge 200 is dipped in the solvent 230, and the tip of the pipe 221 extends to a position of not being immersed in the solvent 230.

In FIG. 13, when a sample (for example, gas) to be measured is injected from the injection pipe 220, the sample is penetrated in the solvent 230, and soaked into the crystalline sponge 200 inside the solvent. The sample (a solvent, a carrier or the like) excessively supplied is discharged outside via the pipe 221.

Thereafter, in the present example, the pipes 220 and 221 are pulled out at the same time by holding the projected portion 211 of the support portion 210 therebetween with hand fingers, a manipulator or the like to pull it up, and the sample holder 214 comprising the crystalline sponge 200 in which the sample is soaked is subsequently attached to the goniometer head 15 at the tip of the goniometer 12. In addition, the sample holder 214 and the applicator 300 as a tool to be handled therefor are used together in combination as a sample holder unit 400, and are prepared by the number required for an analysis operation and stored in a box-shaped container, that is, are also possible to be provided as a set.

According to the sample holder unit 400 with the above-described configuration, the crystalline sponge 200 attached to the tip of the pin-shaped holding part 202b (corresponding to a goniometer head pin) constituting part of the sample holder 214 can be safely and easily handled without damage, or deviation from the sample holder 214. That is, the opening 302 becomes a guide surface even when it is removed from the applicator 300, and thus the crystalline sponge 200 in which a very small amount of the sample is soaked can be safely, simply and easily prepared on the goniometer head 15 in a short and quick period of time in such an extent that no damage occurs due to drying, without any damage due to taking only it out from a soaking container unlike a conventional manner. According to the present Example, the sample holder 214 with which soaking of the sample is completed is removed from the applicator 300, and is attached to the goniometer head 15 (Refer to FIG.7A) at the tip portion of the goniometer 12. In this manner, the sample S soaked in the crystalline sponge 200 is easily, precisely and quickly arranged at a predetermined position inside the single-crystal X-ray diffractometer 9 without requiring highly specialized knowledge and precise operations.

### <Introduction of sample by soaking apparatus (soaking machine)>

Next, described is soaking a sample in the crystalline sponge 200 inside the sample holder unit 400 (Refer to FIGS. 10 to 13) with the above-described configuration, that is performed using a soaking machine.

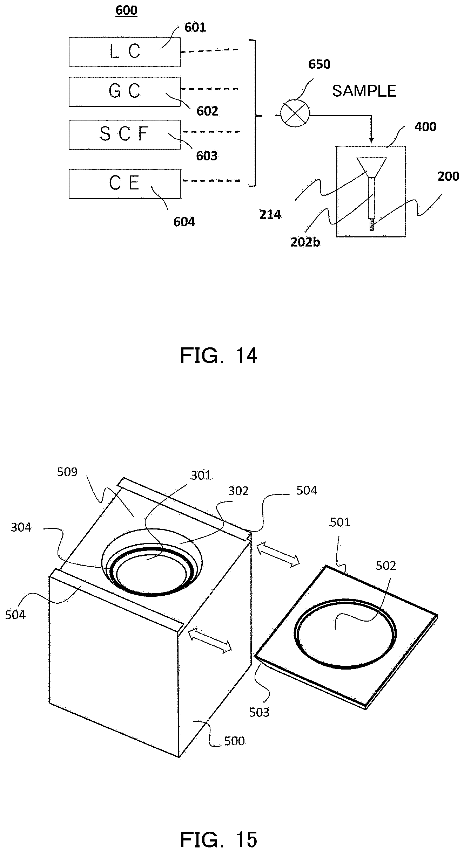

In FIG. 14, a very small amount of the sample S extracted by LC (liquid chromatography) 601, GC (gas chromatography) 602, and further, SCF (supercritical fluid chromatography) 603, CE (electrophoresis) 604 and so forth that constitute a pretreatment device 600 is supplied to a pair of the sample introduction pipes 220 and 221 inserted in the through-holes 204 and 205 of the sample holder 214 via the soaking apparatus (soaking machine) 650 provided with every kind of a switching valve and a pressure adjustment device, that supplies a fluid under the necessary conditions (flow rate and pressure), and the sample is selectively introduced into the storing space 301 inside the applicator 300. That is, the sample is sent to the sample introduction pipe 220 on the supply side from the supply side pipe, and is supplied to the sample holder 214 inside the applicator 300 from the tip portion of the sample introduction pipe 220 on the supply side. Only the sample, or a solution in which the sample and the preserving solvent (carrier) are mixed is supplied by flowing inside the injection pipe 220 on the supply side. In this manner, a very small amount of the sample S introduced thereinto comes into contact with the crystalline sponge 200 attached to the tip of the pin-shaped holding part 202b of the sample holder 214 inside the storing space 301 of the applicator 300, and the sample is soaked therein. In addition, examples of the electrophoresis device herein include various electrophoresis devices concerning capillary electrophoresis, isoelectric point electrophoresis, and so forth. When using the soaking machine 500, in a state where the sample is injected thereinto, the excessive sample or a solution in which the sample and the preserving solvent (carrier) are mixed is discharged from the sample introduction pipe 221 on the discharge side, after a predetermined time has elapsed. When not using the soaking machine 500, the unnecessary preserving solvent (carrier) or solution flows inside a sample introduction tube 254 on the discharge side, and is discharged. Accordingly, it is possible that no sample flows through the sample instruction tube 254 on the discharge side. In addition, when a gas and a supercritical fluid each are set as a carrier, the carrier containing a sample is discharged.

Then, the sample holder 214 with which the step of soaking is completed is removed from the applicator 300, and is precisely attached to a predetermined position inside the single-crystal X-ray diffractometer 9, that is, to the goniometer head 15 at the tip of the goniometer 12, for example, by using a positioning mechanism such as the above-described magnetic force or the like. According to the foregoing, the crystalline sponge 200 attached to a part (tip) of the pin-shaped holding part 202b of the sample holder 214 is to be arranged to the tip of the goniometer 12, that is, to a position where X-ray beam is focused and irradiated from the X-ray tube 11 after soaking the sample is completed. In other words, the sample S soaked in the crystalline sponge 200 is precisely arranged at a predetermined position inside the single-crystal X-ray diffractometer 9, and the intensity of X-rays diffracted from the sample S is subsequently measured by the X-ray detector 22 to analyze a crystal structure thereof, and so forth.

In this manner, by the sample holder unit 400 according to the present invention, it becomes possible that a very small amount of sample is soaked in the crystalline sponge 200 in very small size, that is combinedly attached beforehand to the sample holder 214 in an easy and safe manner by anyone, and subsequently, the sample S is quickly and safely installed to the goniometer 12 as a precise position with high accuracy in a short period of time in such an extent that the crystalline sponge is not broken due to being dried. In addition, then, it is identical to those in the current condition that X-rays diffracted and scattered by an object material are measured while irradiating X-rays having a required wavelength to the sample S by the above-described single-crystal X-ray diffractometer 9, and the structure analysis is performed by a measurement application software constituting the above-described single-crystal X-ray structure analysis apparatus to carry out construction of molecular modelling, preparation of a final report, and so forth. That is, the present example brings quick, safe and easy check of the molecular structure/aggregative structure (actual space) of a newly discovered or designed structure at sites and so forth of not only drug development and life science but also every kind of material research.

### Example 2

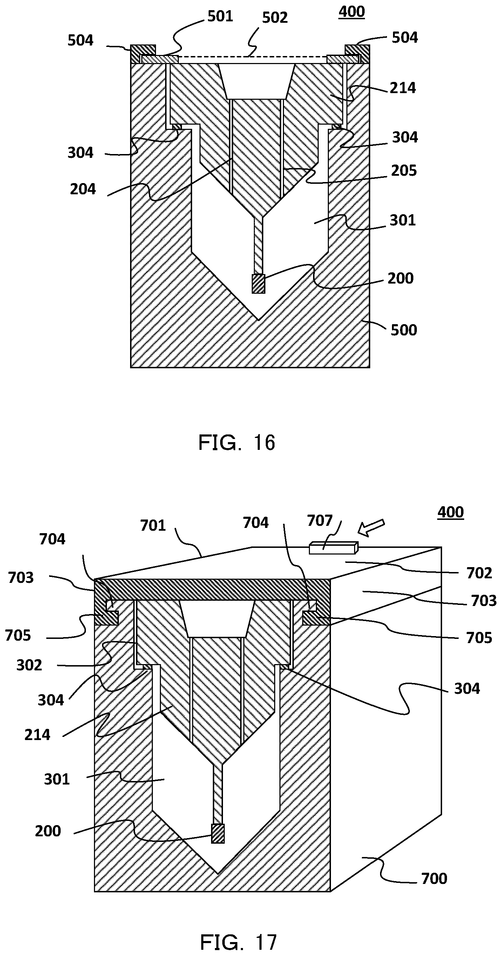

FIG. 15 is a perspective view of the applicator 500 of Example 2; FIG. 16 is a sectional view of the sample holder unit 400 obtained by storing the sample holder 214 in the applicator 500; and the same symbols are given the same portions as those in Example 1. Symbol 501 represents a plate-shaped pull-out prevention part (sliding part) that slides so as to protrude to the opening 302 from a lateral direction along the opening surface 509 of the applicator 500 (or, to carry out covering thereof). The pull-out prevention part 501 is engaged with the upper surface of the sample holder 214 stored in the applicator 500 in an attached state thereof, and prevents the sample holder from being pulled out therefrom. Symbols 504 and 504 represent a pair of guide rails each whose cross-section is U-shaped, the guide rails are arranged so as to extend in parallel at both side portions of the opening surface 509, and the pull-out prevention part 501 whose both side ends are engaged with the guide rails 504 and 504 is slidably guided in both directions of each arrow.

The pull-out prevention part 501 provided with a circle-shaped opening part 502 in the central part, wherein the opening part 502 has an inner diameter smaller than an outer diameter of the disk-shaped base part 201 of the sample holder 214, is engaged with only the outer peripheral portions of the upper surface of the sample holder 214 so as not to cover the through-holes 204 and 205 to prevent the sample holder 214 from being pulled out therefrom, when its attachment to the applicator 500 (Refer to FIG. 16). In addition, in the state where the sample introduction pipes 220 and 221 are inserted therein, the pull-out prevention part 501 is engaged with the sample holder 214 at the position away from the sample introduction pipes. In addition, being engaged therewith at the position away from the sample introduction pipes means being engaged with the sample holder 214 in a state where the sample introduction pipes are not prevented from being inserted/ejected thereinto/therefrom, when having attached the pull-out prevention part 501 to the applicator 500. The pull-out prevention part 501, at a front end of which an inclined surface 503 is provided to a sliding lower surface, is made to be attached thereto while pushing down the upper surface of the sample holder 214 by the inclined surface 503 via sliding, and sliding between the upper surface of the sample holder 214 and the opening surface 509 of the applicator 500 is smoothly performed by the inclined surface 503.

When soaking a sample into the crystalline sponge 200, the sample introduction pipes 220 and 221 are inserted into the through-holes 204 and 205 exposed to the opening part 502 in a state of attaching the pull-out prevention part 501 thereto.

According to the present Example 2, the plate-shaped light-weight pull-out prevention part is used as a pull-out prevention part, and thus pull-out prevention can be easily and surely performed with an easy operation.

### Example 3

FIG. 17 is a perspective view of a sample holder unit 400 showing part of the Example 3 in cross-section, showing a state where the pull-out prevention part is attached to the applicator; it is omitted to show the opening part (Refer to symbol 502 in FIG. 15) of the pull-out prevention part; and the same symbols are given the same portions as those in Example 2.

Symbol 700 represents an applicator, and symbol 701 represents a pull-out prevention part (sliding part) for sliding an opening (that is not shown in the figure) of the applicator 700 in the arrow direction, that is formed of a resin, metal or the like in plate thickness exhibiting high mechanical strength (about 10 atmospheric pressure). Symbols 704 and 704 representing a pair of guide rails arranged in parallel so as to extend in a lateral direction at both side portions above the applicator 700 exhibit high mechanical strength, the guide rails each whose cross-section is channel-shaped (U-shaped), are formed in plate thickness exhibiting strength (about 10 atmospheric pressure). Symbols 705 and 705 representing engagement parts at both side ends 703 of the pull-out prevention part 701, the engagement parts each whose cross-section is channel-shaped (U-shaped), are formed of a resin, metal or the like exhibiting high mechanical strength so as to be engaged with the guide rails 704 and 704.

Symbol 707 representing a protrusion-shaped operation part provided on a top plate 702 of the pull-out prevention part 701 is used for a sliding operation of the pull-out prevention part 701. Further, it is omitted to show the figure, but similarly to Example 2, an inclined surface is provided to a sliding lower surface at a front end of the pull-out prevention part 701, and smooth sliding between the sample holder 214 and the applicator 700 is made possible.

The attachment thereof into the applicator 700 is performed by engaging the engagement parts 705 and 705 of the pull-out prevention part 701 with the guide rails 704 and 704, and slidably operating the operation part 707 in the arrow direction with hand fingers, a manipulator or the like. The pull-out prevention part 701 is engaged with the upper surface of the sample holder 214 in the attached state thereof, and suppresses the pull-out thereof from the applicator. The removal of the pull-out prevention part 701 therefrom is carried out by operating the operation part 707 in the direction opposite to that at the time of attachment thereof to remove the pull-out prevention part 701 from the guide rails 704 and 704.

As described above in detail, according to a sample holder unit for a single-crystal X-ray structure analysis apparatus of the present invention, the single-crystal X-ray structure analysis using a very small and fragile crystalline sponge can be quickly, surely and easily performed without accompanying the conventionally required fine and precise operation, even if not having specialized knowledge of X-ray structure analysis, in other words, there is provided the sample holder unit capable of realizing a very versatile and user-friendly single-crystal X-ray structure analysis apparatus that is capable of high-yield and efficient performance of the single-crystal structure analysis using the crystalline sponge, and further provided is a sample holder unit having a configuration more adaptable to the actual sample preparation operation.

In the step of soaking a sample into the crystalline sponge 200, the sample is supplied to the sample holder unit 400 set to a temperature, a pressure and so forth that are suitable for soaking from the soaking apparatus (soaking machine) 650 (Refer to FIG. 14) under the suitable conditions for soaking (a pressure, a flow rate and so forth). Thus, the inside of the sample holder unit 400 needs to endure various temperatures and pressures (about 10 atmospheric pressure). In the present Example 3, the pull-out prevention part 701, the engagement part 705 and the guide rails 704 in plate thickness exhibiting high mechanical strength (about 10 atmospheric pressure) are used, and further, the engagement part 705 and the guide rails 704 each are formed into its channel-shaped (U-shaped) cross-section type exhibiting high mechanical strength (about 10 atmospheric pressure), thereby being responsively and sufficiently endurable in mechanical strength.

In addition, though various Examples according to the present invention are described above, the present invention is not limited to the above-described Examples and includes various modified examples. For example, the above-described Examples describe the entire system in detail in order to facilitate understanding of the present invention, but are not necessarily limited to those having all the configurations that have been described. Further, a part of a configuration of one Example may be replaced with a configuration of another Example; further, a configuration of another Example may also be added to a configuration of one Example; and with respect to a part of a configuration of each Example, further performed may be addition/deletion/replacement of another configuration.

The present invention is widely applicable for an X-ray structure analysis apparatus used for searching a material structure, a method thereof, and so forth.

In addition, the present international application claims priority under Japanese Patent Application No. 2018-219781, filed November 22, 2018.

### EXPLANATION OF THE SYMBOLS

1 ··· Single-crystal X-ray structure analysis apparatus (whole); 9 ··· Single-crystal X-ray diffractometer; 11 ··· X-ray tube; 12 ··· Goniometer; 22 ··· X-ray detector; 102 ··· Measurement device; 103 ··· Input device; 104 ··· Image display device; 107 ··· CPU; 108 ··· RAM; 109 ··· ROM; 111 ··· Hard disk; 116 ··· Analysis application software; 117 ··· Measurement application software; 200 ··· crystalline sponge; 201 ··· Base part; 202 ··· Protrusion part; 202b ··· Sample holding part; 204, 205 ··· Through-hole; 214 ··· Sample holder; 220, 221 ··· Sample introduction pipe (Pipe); 300, 500, 700 ··· Applicator; 301 ··· Storing space; 302 ··· Opening; 305, 501, 701 ··· Pull-out prevention part; and 400 ··· Sample holder unit.

## Claims

1. A sample holder unit (400) for single-crystal X-ray structure analysis using a porous complex crystal, the sample holder unit (400) comprising a sample holder (214) used in a single-crystal X-ray structure analysis apparatus, and an applicator (300, 500, 700) in which the sample holder (214) can be stored,
wherein the sample holder (214) comprises:
a base part (201) attachable to a goniometer (15) in the single-crystal X-ray structure analysis apparatus, the base part (201) formed to have a sample introduction structure (204, 205) into which a sample to be soaked in the porous complex crystal is introduced; and
a holding part (202b) that can hold the porous complex crystal capable of soaking the sample in a plurality of fine pores formed therein, the holding part (202b) formed to the base part (201), and
the applicator (300, 500, 700) comprises:
an opening (302) and a storing space (301) in which the sample holder (214) that holds the porous complex crystal can be stored;
a seal part (304) provided on a contact surface with the sample holder (214) stored in the storing space (301); and
a pull-out prevention part (305, 501) that can prevent the sample holder (214) from being pulled out from the opening (302), the pull-out prevention part (305, 501) engaged with the sample holder (214) stored in the storing space (301).

2. The sample holder unit (400) according to claim 1,
wherein the sample introduction structure comprises a sample introduction pipe (220, 221) passing through the base part (201) from an outside of the unit to an inside thereof, and the pull-out prevention part (305, 501) has a shape not obstructing the sample introduction pipe (220, 221) of the sample holder (214) at an engagement position thereof.

3. The sample holder unit (400) according to claim 1 or 2,
wherein the pull-out prevention part (305, 501) comprises a rotary lever (305) that protrudes toward the opening (302) of the applicator (300, 500, 700) and prevents the sample holder (214) from being pulled out therefrom.

4. The sample holder unit (400) according to claim 1 or 2,
wherein the pull-out prevention part (305, 501) that slides so as to protrude toward the opening (302) of the applicator (300, 500, 700) has a shape that prevents the sample holder (214) from being pulled out therefrom.

5. The sample holder unit (400) according to claim 4,
wherein the pull-out prevention part (305, 501) has an inclined surface (503) at an end of a sliding surface of the pull-out prevention part (305, 501), the sliding surface engaged with the sample holder (214).

6. The sample holder unit (400) according to claim 4 or 5,
wherein the applicator (300, 500, 700) has a pair of parallel guide rails (504, 704) provided at both side portions of the applicator (300, 500, 700), and the pull-out prevention part (305, 501) slides to be engaged with the pair of parallel guide rails (504, 704).

7. The sample holder unit (400) according to claim 4 or 5,
wherein the applicator (300, 500, 700) has a pair of parallel guide rails (504, 704) provided at both side portions of the applicator (300, 500, 700); the pull-out prevention part (305, 502) comprises engagement parts (705) that slide to be engaged with the pair of parallel guide rails (504, 704); and the pair of parallel guide rails (504, 704) and the engagement parts (705) each whose cross-section is U-shaped are formed.

## Patentansprüche

1. Probenhaltereinheit (400) für eine Einkristall-Röntgen-Strukturanalyse unter Verwendung eines porösen komplexen Kristalls, wobei die Probenhaltereinheit (400) einen Probenhalter (214), der in einer Einkristall-Röntgen-Strukturanalysevorrichtung verwendet wird, und einen Applikator (300, 500, 700) umfasst, in welchem der Probenhalter (214) gelagert werden kann,
wobei der Probenhalter (214) umfasst:
ein Basisteil (201), das an einem Goniometer (15) in der Einkristall-Röntgen-Strukturanalysevorrichtung anbringbar ist, wobei das Basisteil (201) dazu gebildet ist, eine Probeneinführungsstruktur (204, 205) aufzuweisen, in welche eine in dem porösen komplexen Kristall zu tränkende Probe eingeführt wird; und
ein Halteteil (202b), das den porösen komplexen Kristall halten kann, der in der Lage ist, die Probe in einer Vielzahl von darin gebildeten feinen Poren zu tränken, wobei das Halteteil (202b) an dem Basisteil (201) gebildet ist, und
der Applikator (300, 500, 700) umfasst:
eine Öffnung (302) und einen Lagerraum (301), in dem der Probenhalter (214), der den porösen komplexen Kristall hält, gelagert werden kann;
ein Dichtungsteil (304), das an einer Kontaktoberfläche mit dem in dem Lagerraum (301) gelagerten Probenhalter (214) vorgesehen ist; und
ein Ausziehverhinderungsteil (305, 501), das verhindern kann, dass der Probenhalter (214) aus der Öffnung (302) herausgezogen wird, wobei das Ausziehverhinderungsteil (305, 501) mit dem in dem Lagerraum (301) gelagerten Probenhalter (214) in Eingriff ist.

2. Probenhaltereinheit (400) nach Anspruch 1,
wobei die Probeneinführungsstruktur ein Probeneinführungsrohr (220, 221) umfasst, das durch das Basisteil (201) von einer Außenseite der Einheit zu einer Innenseite von dieser hindurchgeht, und das Ausziehverhinderungsteil (305, 501) eine Form aufweist, die das Probeneinführungsrohr (220, 221) des Probenhalters (214) in einer Eingriffposition von diesem nicht versperrt.

3. Probenhaltereinheit (400) nach Anspruch 1 oder 2,
wobei das Ausziehverhinderungsteil (305, 501) einen Drehhebel (305) umfasst, der zu der Öffnung (302) des Applikators (300, 500, 700) hin vorsteht und verhindert, dass der Probenhalter (214) aus dieser herausgezogen wird.

4. Probenhaltereinheit (400) nach Anspruch 1 oder 2,
wobei das Ausziehverhinderungsteil (305, 501), das gleitet, um zu der Öffnung (302) des Applikators (300, 500, 700) hin vorzustehen, eine Form aufweist, die verhindert, dass der Probenhalter (214) aus dieser herausgezogen wird.

5. Probenhaltereinheit (400) nach Anspruch 4,
wobei das Ausziehverhinderungsteil (305, 501) eine geneigte Oberfläche (503) an einem Ende einer Gleitoberfläche des Ausziehverhinderungsteils (305, 501) aufweist, wobei die Gleitoberfläche mit dem Probenhalter (214) in Eingriff ist.

6. Probenhaltereinheit (400) nach Anspruch 4 oder **5,**
wobei der Applikator (300, 500, 700) ein Paar von parallelen Führungsschienen (504, 704) aufweist, die an beiden Seitenabschnitten des Applikators (300, 500, 700) vorgesehen sind, und das Ausziehverhinderungsteil (305, 501) gleitet, um mit dem Paar von parallelen Führungsschienen (504, 704) in Eingriff zu sein.

7. Probenhaltereinheit (400) nach Anspruch 4 oder 5,
wobei der Applikator (300, 500, 700) ein Paar von parallelen Führungsschienen (504, 704) aufweist, die an beiden Seitenabschnitten des Applikators (300, 500, 700) vorgesehen sind; das Ausziehverhinderungsteil (305, 502) Eingriffsteile (705) umfasst, die gleiten, um mit dem Paar von parallelen Führungsschienen (504, 704) in Eingriff zu sein; und das Paar von parallelen Führungsschienen (504, 704) und die Eingriffsteile (705) jeweils mit U-förmigem Querschnitt gebildet sind.

## Revendications

1. Unité de porte-échantillon (400) pour l'analyse structurelle par rayons X d'un monocristal en utilisant un cristal complexe poreux, l'unité de porte-échantillon (400) comprenant un porte-échantillon (214) utilisé dans un appareil d'analyse structurelle par rayons X d'un monocristal, et un applicateur (300, 500, 700) dans lequel le porte-échantillon (214) peut être stocké,
dans laquelle le porte-échantillon (214) comprend :
une partie de base (201) liée à un goniomètre (15) dans l'appareil d'analyse structurelle par rayons X d'un monocristal, la partie de base (201) étant formée de manière à comporter une structure d'introduction d'échantillon (204, 205) à l'intérieur de laquelle un échantillon destiné à être imprégné dans le cristal complexe poreux est introduit ; et
une partie de support (202b) qui peut supporter le cristal complexe poreux et qui permet d'imprégner l'échantillon dans une pluralité de pores fins formés en son sein, la partie de support (202b) étant formée sur la partie de base (201), et
l'applicateur (300, 500, 700) comprend :
une ouverture (302) et un espace de stockage (301) dans lequel le porte-échantillon (214) qui supporte le cristal complexe poreux peut être stocké ;
une partie d'étanchéité (304) prévue sur une surface de contact avec le porte-échantillon (214) qui est stocké dans l'espace de stockage (301) ; et
une partie d'empêchement d'extraction (305, 501) qui permet d'empêcher l'extraction, à partir de l'ouverture (302), du porte-échantillon (214), la partie d'empêchement d'extraction (305, 501) étant engagée avec le porte-échantillon (214) qui est stocké dans l'espace de stockage (301).

2. Unité de porte-échantillon (400) selon la revendication 1,
dans laquelle la structure d'introduction d'échantillon comprend un tube d'introduction d'échantillon (220, 221) qui traverse la partie de base (201) depuis un extérieur de l'unité jusqu'à l'intérieur de celle-ci, et la partie d'empêchement d'extraction (305, 501) présente une forme qui n'obstrue pas le tube d'introduction d'échantillon (220, 221) du porte-échantillon (214) au niveau de sa position d'engagement.

3. Unité de porte-échantillon (400) selon la revendication 1 ou 2,
dans laquelle la partie d'empêchement d'extraction (305, 501) comprend un levier rotatif (305) qui fait saillie en direction de l'ouverture (302) de l'applicateur (300, 500, 700) et qui empêche que le porte-échantillon (214) n'en soit extrait.

4. Unité de porte-échantillon (400) selon la revendication 1 ou 2,
dans laquelle la partie d'empêchement d'extraction (305, 501) qui coulisse de manière à faire saillie en direction de l'ouverture (302) de l'applicateur (300, 500, 700) présente une forme qui empêche que le porte-échantillon (214) n'en soit extrait.

5. Unité de porte-échantillon (400) selon la revendication 4,
dans laquelle la partie d'empêchement d'extraction (305, 501) comporte une surface inclinée (503) au niveau d'une extrémité d'une surface de coulissement de la partie d'empêchement d'extraction (305, 501), la surface de coulissement étant engagée avec le porte-échantillon (214).

6. Unité de porte-échantillon (400) selon la revendication 4 ou 5,
dans laquelle l'applicateur (300, 500, 700) comporte une paire de rails de guidage parallèles (504, 704) qui sont prévus au niveau des deux parties latérales de l'applicateur (300, 500, 700), et la partie d'empêchement d'extraction (305, 501) coulisse pour être engagée avec la paire de rails de guidage parallèles (504, 704).

7. Unité de porte-échantillon (400) selon la revendication 4 ou 5,
dans laquelle l'applicateur (300, 500, 700) comporte une paire de rails de guidage parallèles (504, 704) qui sont prévus au niveau des deux parties latérales de l'applicateur (300, 500, 700) ; la partie d'empêchement d'extraction (305, 501) comprend des parties d'engagement (705) qui coulissent pour être engagées avec la paire de rails de guidage parallèles (504, 704) ; et la paire de rails de guidage parallèles (504, 704) et les parties d'engagement (705) dont chacune présente une section en coupe transversale en forme de U sont formés.
